# FASCICULE DE BREVET EUROPEEN

(11) **EP 3 299 185 B1**
(45) Date de publication et mention de la délivrance du brevet: **07.08.2019**
(21) Numéro de dépôt: 17193242.9
(22) Date de dépôt: 26.09.2017
(51) Int. Cl.: B60C 11/24, B60C 23/06, G01G 19/08

(54) **PROCÉDÉ ET DISPOSITIF DE DÉTERMINATION DE LA CHARGE D'UNE ROUE D'UN VÉHICULE, ET PROCÉDÉ ET SYSTÈME DE CARACTÉRISATION D'UN VÉHICULE**
VERFAHREN UND VORRICHTUNG ZUR BESTIMMUNG DER RADLAST EINES FAHRZEUGS, UND VERFAHREN UND SYSTEM ZUR CHARAKTERISIERUNG EINES FAHRZEUGS
METHOD AND DEVICE FOR DETERMINING THE LOAD OF A WHEEL OF A VEHICLE, AND METHOD AND SYSTEM FOR CHARACTERISING A VEHICLE

(30) Priorité: 27.09.2016 FR 1659108
(43) Date de publication de la demande: 28.03.2018
(73) Titulaire: Capteur Technologie Electronique et Systemes SA, 34270 Saint-Mathieu-de-Treviers (FR)
(72) Inventeur: COUDOUEL, Denis, 34160 CASTRIES (FR); LEA, Etienne, 34090 MONTPELLIER (FR); LEA, Jean-Paul, 34070 MONTPELLIER (FR); MICALLEF, Jean-Paul, 34790 GRABELS (FR)
(74) Mandataire: IPAZ

(56) Documents cités:
- EP-A2- 2 039 540
- FR-A1- 3 020 314

## Description

L'invention concerne un procédé de détermination de la charge d'une roue d'un véhicule. Elle concerne également un dispositif mettant en oeuvre un tel procédé, un procédé et un système de caractérisation d'un véhicule, notamment pour déterminer le poids d'un véhicule.

Le domaine de l'invention est plus particulièrement, le domaine du pesage embarqué d'un véhicule, qu'il soit à l'arrêt ou en mouvement.

### ETAT DE LA TECHNIQUE

On connait les systèmes de pesage de véhicules embarqués comprenant divers capteurs positionnés au niveau d'une ou plusieurs roues du véhicule, tels que des jauges de déformation, des capteurs de pression, et/ou des capteurs de température, etc. Les données de ces capteurs, en particulier les déformations mesurées par les jauges sont utilisées pour déterminer la charge et les efforts dynamiques qui s'appliquent sur les roues à partir de modélisations complexes.

Les procédés et systèmes de l'état de la technique mettent en oeuvre une modélisation complexe consommatrice en temps et en ressources numériques. De plus, un modèle spécifique doit être déterminé pour chaque type/modèle de roue, ce qui nécessite beaucoup de temps et d'essais expérimentaux. En outre, les procédés et systèmes de l'état de la technique ne permettent pas de déterminer la charge d'une roue ou le poids du véhicule avec une précision satisfaisante.

Le document FR 3 020 314 A1, en accord avec les préambules respectifs des revendications 1, 6 et 9, décrit un procédé et un système de pesage amélioré dans lequel la charge appliquée à une roue est déterminée en fonction d'une surface de contact de la roue avec le sol. La technologie décrite dans ce document permet de répondre aux inconvénients précités.

Toutefois, la mesure d'une surface de contact reste assez complexe et difficile à réaliser, et nécessite parfois que le véhicule soit en mouvement. De plus, la détermination de la surface de contact au sol d'une roue nécessite aussi de connaitre les dimensions, ou du moins la largeur de la roue.

Un but de la présente invention est de remédier à ces inconvénients.

Un autre but de la présente invention est de proposer un procédé et un dispositif pour déterminer la charge d'une roue plus simple à mettre en oeuvre.

Encore un but de la présente invention est de proposer un procédé et un dispositif pour déterminer la charge d'une roue indépendant des dimensions de la roue.

Il est aussi un but de la présente invention de proposer un procédé et un dispositif pour déterminer la charge d'une roue avec une utilisation continue.

### EXPOSE DE L'INVENTION

Au moins un des objectifs précités est atteint par un procédé pour déterminer une charge d'une roue d'un véhicule, comprenant les étapes suivantes :
- mesure d'au moins une donnée, dite circonférentielle, relative à une circonférence supportée par ladite roue, et
- calcul de la charge de ladite roue en fonction de ladite donnée circonférentielle.

Avec le procédé selon l'invention, l'estimation de la charge d'une roue s'effectue à partir d'une donnée relative à la circonférence de la roue. En effet, les inventeurs de la présente demande ont constaté que la charge d'une roue est directement reliée à la circonférence de la roue à l'arrêt et en mouvement. Le procédé selon l'invention permet donc de calculer la charge de la roue à partir de la donnée circonférentielle, par exemple en utilisant une relation prédéterminée expérimentalement.

De plus, le procédé utilise des données peu complexes, comme la circonférence d'une roue, pour calculer la charge de la roue. Ceci permet de recourir à des modèles de calcul simples et donc peu chronophages.

Par ailleurs, la donnée circonférentielle peut être mesurée indépendamment des dimensions de la roue, en particulier de sa largeur. Ceci permet une plus grande flexibilité du procédé en particulier dans le cas de panne et/ou de changement de roue. L'utilisation du procédé selon l'invention peut ainsi être continue.

Suivant un mode de réalisation la donnée circonférentielle peut correspondre à la circonférence de la roue.

Alternativement, la donnée circonférentielle peut être relative à une variation de la circonférence de la roue, par exemple par rapport à une circonférence préalablement mesurée ou par rapport à une circonférence, dite de référence mesurée pour une charge, dite de référence.

La donnée circonférentielle étant relative à la circonférence, le procédé ne nécessite pas la mesure de dimensions de la roue. Il est donc facilement adaptable à tous les types de roue.

Par ailleurs, la donnée circonférentielle peut être une combinaison d'au moins une des mesures suivante :
- une mesure d'au moins une résistance électrique,
- une mesure d'au moins une capacité,
- une mesure métrique,
- une mesure d'au moins une fréquence,
- une mesure d'au moins un champ magnétique,
- une mesure d'au moins une grandeur optique (déphasage, interférence, variation de longueur d'onde, etc...), et/ou
- une mesure d'au moins une donnée relative à une impédance électrique.

Suivant un mode de réalisation, le calcul de la charge peut être réalisé en reliant la donnée circonférentielle à une charge par une relation. Par exemple, la relation reliant la donnée circonférentielle à une charge peut être une équation polynomiale paramétrée, les paramètres de l'équation dépendant de la pression, de la température, l'humidité, le type de gaz de gonflage de la roue, ou d'autres grandeurs d'influence.

De plus, le calcul de la charge peut être réalisé par une table de correspondance, préalablement déterminée.

Suivant un autre mode de réalisation du procédé selon l'invention, le calcul de la charge de la roue peut être fonction en outre d'une charge, dite de référence, préalablement mesurée pour une circonférence, dite de référence. Dans ce cas, la relation utilisée pour déterminer la charge prend en compte ladite charge de référence et ladite circonférence de référence.

Suivant un exemple de réalisation nullement limitatif, la circonférence de référence et la charge de référence peuvent être déterminées à l'arrêt lorsque la roue n'est pas chargée. Des mesures expérimentales peuvent ensuite déterminer pour une ou plusieurs valeurs de charges différentes, connues préalablement, la variation circonférentielle. La charge du véhicule peut ainsi être déterminée simplement en connaissant la circonférence de référence et la charge de référence, et en mesurant la donnée circonférentielle.

Avantageusement, le procédé selon l'invention peut comprendre une étape de mesure d'au moins une donnée, dite de pression, relative à une pression à l'intérieur de la roue du véhicule, l'étape de calcul s'effectuant en fonction en outre de ladite donnée de pression.

La mesure de la donnée de pression permet d'augmenter la précision de la détermination de la charge du véhicule. En effet, la pression influence la déformation de la roue soumise à une charge, en particulier son périmètre.

Dans une version préférée, le procédé selon l'invention peut comprendre une étape de mesure d'au moins une donnée, dite de température, relative à une température à l'intérieur de la roue du véhicule, l'étape de calcul s'effectuant en fonction en outre de ladite donnée de température.

L'utilisation de la donnée relative à la température permet aussi d'augmenter la précision de l'estimation de la charge du véhicule. En effet, la variation de température influence l'état de la roue et donc la variation de sa circonférence.

Suivant un autre aspect de l'invention, il est proposé un procédé pour caractériser un véhicule comprenant plusieurs roues, caractérisé en ce qu'il comprend les étapes suivantes :
- détermination des charges d'au moins deux roues, en particulier de toutes les roues, dudit véhicule par le procédé selon l'invention, et
- calcul d'au moins un paramètre relatif audit véhicule en fonction desdites charges desdites roues.

Préférentiellement, le procédé selon l'invention peut en outre comprendre une mesure d'une donnée relative à :
- une inclinaison du véhicule suivant une direction d'un essieu dudit véhicule, et/ou
- une inclinaison du véhicule suivant une direction perpendiculaire à un essieu dudit véhicule.

La mesure d'une telle inclinaison permet de caractériser le véhicule même si ce dernier n'est pas sur un sol parfaitement plat.

Selon un mode de réalisation du procédé selon l'invention, le paramètre relatif au véhicule peut comprendre :
- un poids total du véhicule ou un poids d'un essieu du véhicule ou un poids sur un côté du véhicule, et/ou
- un centre de gravité du véhicule ou un centre de gravité d'un essieu du véhicule ou un centre de gravité sur un côté du véhicule.

Suivant encore un autre aspect de l'invention, il est proposé un dispositif pour déterminer une charge d'une roue d'un véhicule, caractérisé en ce qu'il comprend :
- au moins un moyen, dit de mesure, pour mesurer au moins une donnée, dite circonférentielle, relative à une circonférence de ladite roue,
- au moins un moyen configuré pour déterminer la charge de ladite roue en fonction de ladite au moins une donnée circonférentielle ;
ledit dispositif étant configuré pour mettre en oeuvre toutes les étapes du procédé selon l'invention pour déterminer une charge d'une roue d'un véhicule.

Suivant un mode de réalisation, l'au moins un moyen de mesure peut comprendre une combinaison quelconque de l'un au moins des moyens suivants :
- une jauge de déformation,
- un fil résistif,
- une capacité,
- un fil inductif, et/ou
- une fibre optique.

Selon une version de réalisation du dispositif selon l'invention, l'au moins un moyen de mesure peut être prévu pour être disposé :
- sur une face intérieure, ou extérieure, d'une bande de roulement de la roue, par exemple par collage à ladite face de la bande de roulement, ou
- à l'intérieur de ladite bande de roulement de la roue, c'est-à-dire dans l'épaisseur de la bande de roulement, par exemple lors de la fabrication de la roue.

Selon un autre mode de réalisation du dispositif selon l'invention, l'au moins un moyen de mesure peut être disposé suivant un flanc de la bande de roulement de la roue.

Dans un mode de réalisation du dispositif selon l'invention, l'au moins un moyen de mesure peut être agencé suivant la circonférence complète de la roue.

Alternativement, l'au moins un moyen de mesure peut être agencé sur une partie de la circonférence de la roue.

En outre, le dispositif selon l'invention peut comprendre plusieurs moyens de mesure, en particulier trois, agencés dans différentes parties séparées de la circonférence de la roue.

Alternativement, les moyens de mesure peuvent se chevaucher, au moins en partie.

En particulier, la position des moyens de mesure peut être choisie en fonction de la qualité du signal de sortie fourni par lesdits moyens de mesure.

Selon un mode de réalisation, le dispositif selon l'invention peut comprendre un premier moyen de mesure pour mesurer une circonférence de référence, et au moins un second moyen de mesure pour mesurer une donnée circonférentielle.

Par exemple, le dispositif selon l'invention peut comprendre deux moyens de mesure, avec une sensibilité à la déformation différente. La donnée circonférentielle est déterminée en fonction de la différence de signal entre les deux moyens de mesure. La mesure est ainsi plus fiable. En effet, les moyens de mesure ayant la même sensibilité aux autres grandeurs d'influence, permettent d'éliminer le mode commun. Par exemple, un échauffement du pneu induit la même perturbation du signal en sortie de chacun des moyens de mesure, qui est éliminée par la différence entre les mesures des deux moyens de mesure.

Alternativement, le dispositif selon l'invention peut comprendre deux moyens de mesure, le premier moyen de mesure étant agencé sur une partie non déformable de la roue, tandis que le second moyen de mesure étant agencé sur une partie déformable de la roue telle que la bande de roulement. La donnée circonférentielle est alors déterminée en fonction de la différence de signal entre les deux moyens de mesure.

Selon un mode de réalisation particulier, le dispositif selon l'invention peut comprendre :
- au moins un moyen de mesure d'au moins une donnée, dite de pression, relative à une pression à l'intérieur de la roue du véhicule, et/ou
- au moins un moyen de mesure d'au moins une donnée, dite de température, relative à une température à l'intérieur de la roue du véhicule ;
le moyen de calcul étant configuré pour déterminer la charge de la roue en fonction en outre de ladite donnée de pression, et/ou de ladite donnée de température.

Le moyen de mesure de l'au moins une donnée de pression peut être un capteur de pression sans fil disposé à l'intérieur de la roue.

Le moyen de mesure de ladite au moins une donnée de température peut être un capteur de température sans fil disposé à l'intérieur de la roue.

Préférentiellement, le capteur de pression et le capteur de température peuvent être regroupés dans un dispositif de mesure, en particulier sans fil, agencé à l'intérieur de la roue.

Le dispositif de mesure peut transmettre des données relatives à la pression et à la température à l'intérieur de la roue par une transmission sans fils par exemple une transmission haute fréquence, infrarouge, magnétique, optique, et/ou Bluetooth®, etc.

Suivant encore un autre aspect de l'invention, il est proposé une roue équipée :
- d'un dispositif selon l'invention, ou
- de moyens configurés pour mettre en oeuvre toutes les étapes du procédé selon l'invention pour déterminer une charge d'une roue.

Suivant encore un autre aspect de l'invention, il est proposé un système pour caractériser un véhicule comprenant plusieurs roues, caractérisé en ce qu'il comprend :
- un dispositif selon l'invention, ou
- des moyens configurés pour mettre en oeuvre toutes les étapes du procédé selon l'invention, pour déterminer les charges d'au moins deux roues, en particulier de toutes les roues, dudit véhicule ; et
- un moyen de calcul d'au moins un paramètre relatif audit véhicule en fonction desdites charges desdites roues.

Dans un mode de réalisation, le système selon l'invention peut comprendre au moins un moyen pour mesurer une donnée relative à :
- une inclinaison du véhicule suivant une direction d'un essieu dudit véhicule, et/ou
- une inclinaison du véhicule suivant une direction perpendiculaire à un essieu dudit véhicule.

Suivant une version de réalisation du système selon l'invention, le paramètre relatif au véhicule comprend :
- un poids total du véhicule ou un poids d'un essieu du véhicule ou un poids sur un côté du véhicule, et/ou
- un centre de gravité du véhicule ou un centre de gravité d'un essieu du véhicule ou un centre de gravité sur un côté du véhicule.

Suivant encore un autre aspect de l'invention, il est proposé un véhicule équipé :
- d'un système selon l'invention, ou
- d'au moins une roue selon l'invention, ou
- de moyens configurés pour mettre en oeuvre toutes les étapes du procédé selon l'invention pour caractériser un véhicule.

### DESCRIPTION DES FIGURES ET MODES DE REALISATION

D'autres avantages et caractéristiques apparaîtront à l'examen de la description détaillée d'exemples nullement limitatifs, et des dessins annexés sur lesquels :
- la FIGURE 1 est une représentation schématique d'un exemple de procédé pour déterminer une charge d'une roue d'un véhicule ;
- la FIGURE 2 est une représentation schématique d'un exemple de procédé pour caractériser un véhicule ; et
- les FIGURES 3a et 3b sont des représentations schématiques d'une roue équipée d'un premier exemple du dispositif selon l'invention ; et
- les FIGURES 4a et 4b sont des représentations schématiques d'une roue équipée d'un deuxième exemple du dispositif selon l'invention ;
- les FIGURES 5a et 5b sont des représentations schématiques d'une roue équipée d'un troisième exemple du dispositif selon l'invention ;
- les FIGURES 6a et 6b sont des représentations schématiques d'un exemple d'un véhicule équipé d'un exemple d'un système de caractérisation selon l'invention ; et
- la FIGURE 7 est exemple de mesures de charge d'une roue comprenant le dispositif selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieure.
En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

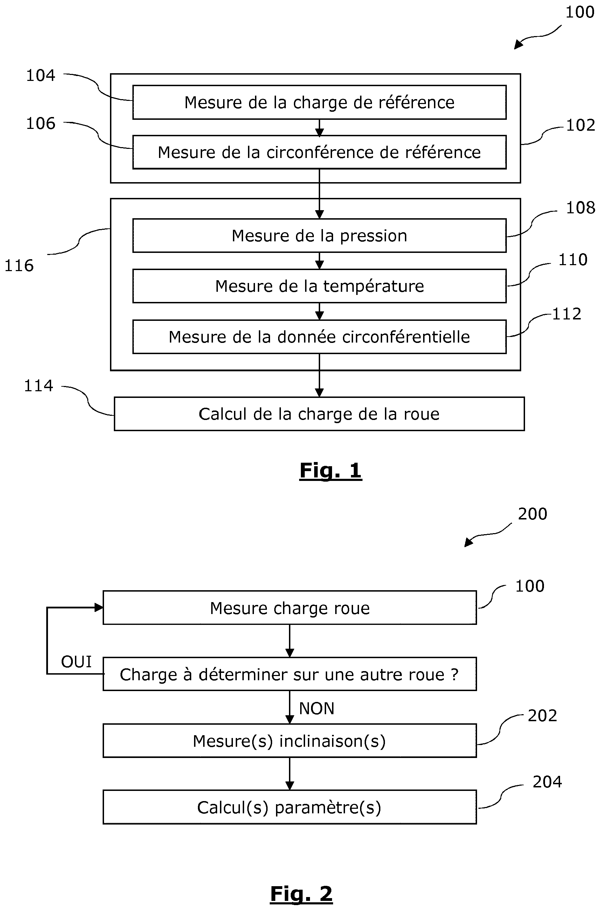

La FIGURE 1 est une représentation schématique d'un exemple de procédé pour déterminer une charge d'une roue d'un véhicule.

Le procédé 100, représenté sur la FIGURE 1, comprend une étape 102 préliminaire de mesures. L'étape 102 comprend :
- une étape 104 de mesure d'une charge, dite de référence, qui correspond par exemple à la charge propre de la roue, et
- une étape 106 de mesure de la circonférence, dite de référence, qui correspond à la circonférence de la roue pour la charge de référence.

Le procédé 100 comprend en outre une étape 116 de mesure de données de la roue avec une charge. L'étape 116 comprend les étapes suivantes :
- une étape 108 de mesure d'une pression à l'intérieur de la roue,
- une étape 110 de mesure d'une température à l'intérieur de la roue,
- une étape 112 de mesure d'une donnée, dite circonférentielle, qui correspond à la variation de la circonférence de la roue avec une charge par rapport à la circonférence de référence.

Ensuite le procédé 100 comprend une étape 114 de calcul de la charge de la roue en fonction des données mesurées : la pression, la température, la donnée circonférentielle et la charge de référence.

La FIGURE 2 est une représentation schématique d'un exemple de procédé pour caractériser un véhicule.

Le procédé 200, représenté sur la FIGURE 2, comprend une étape 100 de mesure de la charge s'appliquant à une roue du véhicule. Cette étape 100 est réitérée autant de fois que nécessaire pour déterminer les valeurs des charges pour au moins deux, en particulier chaque roue du véhicule.

Puis, une étape 202 réalise une ou des mesure(s) d'inclinaison(s). Par exemple, la ou les mesure(s) peuvent comprendre une donnée relative à :
- une inclinaison du véhicule suivant une direction d'un essieu du véhicule, et/ou
- une inclinaison du véhicule suivant une direction perpendiculaire à un essieu du véhicule, ou encore
- une inclinaison du véhicule suivant une direction transversale ou diagonale par rapport au véhicule.

Puis, lors d'une étape 204, un/des paramètre(s) relatif(s) au véhicule est/sont calculé(s). Cette étape 204 peut comprendre un calcul d'au moins un des paramètres suivant :
- un poids total du véhicule,
- un poids d'un essieu du véhicule,
- un poids sur un côté du véhicule,
- un centre de gravité du véhicule,
- un centre de gravité d'un essieu du véhicule, et/ou
- un centre de gravité sur un côté du véhicule.

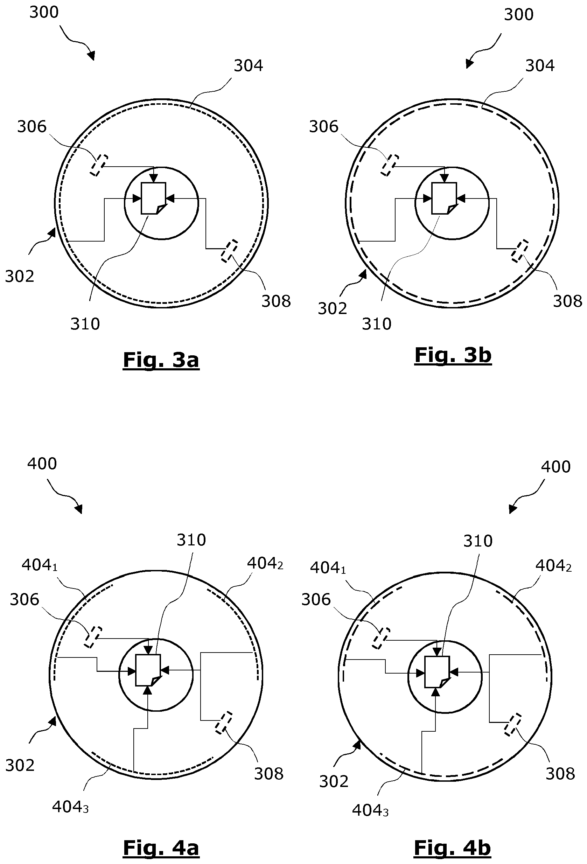

Les FIGURES 3a et 3b sont des représentations schématiques d'une roue équipée d'un premier exemple du dispositif selon l'invention.

Le dispositif 300 représenté sur les FIGURES 3a-3b permet de déterminer la charge s'appliquant sur une roue 302. La roue 302 est représentée sur la FIGURE 3a sans aucune charge et sur la FIGURE 3b, soumise à une charge.

Le dispositif 300 comprend une jauge de déformation 304 agencée à l'intérieur de la roue 302. La jauge de déformation 304 est disposée suivant le contour complet de la roue 302, en particulier sur la face intérieure d'une bande de roulement de la roue 302.

Lorsque la roue 302 est soumise à une charge, la circonférence de la roue 302 varie en fonction de la charge appliquée. La variation de circonférence de la roue 302 entre la roue 302 sans aucune charge, représentée sur la FIGURE 3a, et avec une charge, représentée sur la FIGURE 3b, est mesurée par la jauge de déformation 304. Cette variation de circonférence, dite donnée circonférentielle, est déterminée en particulier en mesurant la variation de la résistance de la jauge de déformation 304 à l'aide, par exemple, d'un pont de Wheatstone.

Le dispositif 300 comprend en outre un capteur de pression 306 à l'intérieur de la roue 302. Le capteur de pression 306 mesure la pression à l'intérieur de la roue 302 et transmet les données relatives à la pression à un récepteur distant, par exemple par une transmission sans fils, haute fréquence, infrarouge, magnétique, optique ou Bluetooth®.

Le dispositif 300 comprend en outre un capteur de température 308 à l'intérieur de la roue 302. Le capteur de température 308 mesure la température à l'intérieur de la roue 302 et transmet les données relatives à la température à un récepteur distant, par exemple par une transmission sans fils, infrarouge, magnétique, optique ou Bluetooth®.

Le capteur de pression 306 et le capteur de température 308 peuvent être disposés dans un même dispositif de mesure sans fils.

Le dispositif 300 comprend une unité de traitement de données 310 recevant des données de la jauge de déformation 304, du capteur de pression 306 et du capteur de température 308.

L'unité de traitement de données 310 est agencée à l'intérieur de la roue 302. Alternativement, elle peut être agencée en périphérie ou sur un flanc de la roue 302.

L'unité de traitement de données 310 détermine la charge de la roue 302 en fonction de :
- la donnée circonférentielle mesurée par la jauge de déformation 304,
- la pression mesurée par le capteur de pression 306, et
- la température mesurée par le capteur de température 308.

Les FIGURES 4a et 4b sont des représentations schématiques d'une roue équipée d'un deuxième exemple du dispositif selon l'invention.

Le dispositif 400 représenté sur les FIGURES 4a-4b permet de déterminer la charge s'appliquant sur la roue 302. La roue 302 est représentée sur la FIGURE 4a sans aucune charge et sur la FIGURE 4b, soumise à une charge.

Le dispositif 400 comprend le capteur de pression 306 et le capteur de température 308 des FIGURES 3a et 3b, pour mesurer, respectivement, la pression et la température à l'intérieur de la roue 302.

Le dispositif 400 comprend en outre trois jauges de déformation 404₁-404₃. Les jauges de déformation 404 sont disposées sur la face intérieure de la bande de roulement de la roue 302. Elles sont distribuées suivant le contour de la roue 302, en particulier une même distance entre deux jauges de déformation 404 consécutives est respectée.

Les jauges de déformation 404 sont disposées de façon à mesurer une variation de la circonférence, dite donnée circonférentielle, de la roue 302. En effet, la circonférence de la roue 302 soumise à une charge change lorsqu'une charge est appliquée à la roue 302 induisant la déformation des jauges de déformation 404, tel que représenté sur la FIGURE 4b.

Le dispositif 400 comprend en outre l'unité de traitement de données 310 recevant, par une transmission sans fils, des données des jauges de déformation 404, du capteur de pression 306 et du capteur de température 308.

Les données retournées par les jauges de déformation 404 sont traitées par l'unité de traitement de données 310 pour estimer la donnée circonférentielle de la roue 302.

L'unité de traitement de données 310 détermine la charge de la roue 302 en fonction et de :
- la donnée circonférentielle de la roue 302,
- la pression à l'intérieur de la roue 302, et
- la température à l'intérieur de la roue 302.

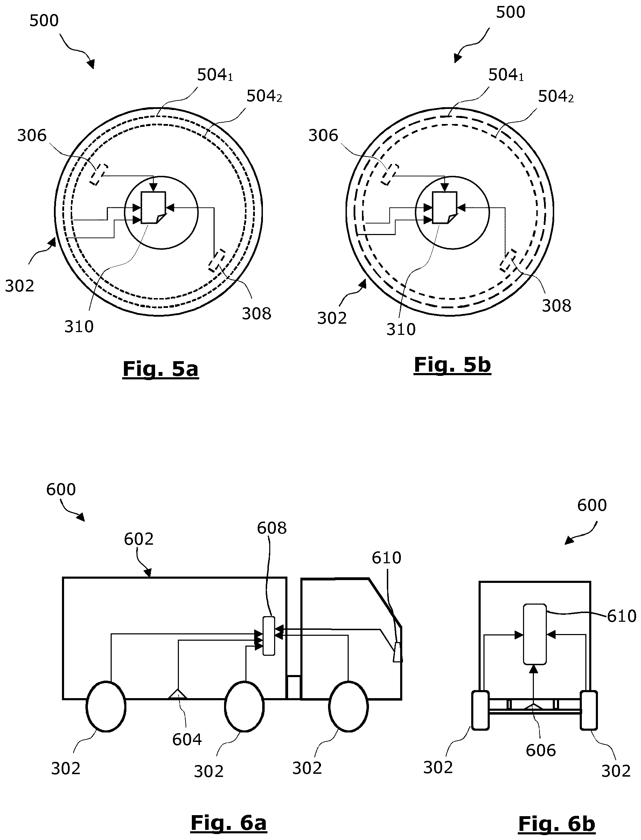

Les FIGURES 5a et 5b sont des représentations schématiques d'une roue équipée d'un troisième exemple du dispositif selon l'invention.

Le dispositif 500 représenté sur les FIGURES 5a-5b permet de déterminer la charge s'appliquant sur la roue 302. La roue 302 est représentée sur la FIGURE 5a sans aucune charge et sur la FIGURE 5b, soumise à une charge.

Le dispositif 500 comprend le capteur de pression 306 et le capteur de température 308 des FIGURES 3a et 3b, pour mesurer, respectivement, la pression et la température à l'intérieur de la roue 302.

Le dispositif 500 comprend en outre deux jauges de déformation 504₁ et 504₂ possédant des sensibilités à la déformation différentes et connues. Les jauges de déformation 504 sont disposées sur la face intérieure de la bande de roulement de la roue 302.

Le dispositif 500 comprend en outre l'unité de traitement de données 310 recevant, par une transmission sans fils, des données des jauges de déformation 504, du capteur de pression 306 et du capteur de température 308.

Les données retournées par les jauges de déformation 504 sont traitées par l'unité de traitement de données 310 pour estimer la donnée circonférentielle de la roue 302. La variation de circonférence de la roue 302 est calculée en fonction de la différence de signal des jauges de déformation 504, lorsque la roue 302 est soumise à une charge.

L'unité de traitement de données 310 détermine la charge de la roue 302 en fonction et de :
- la donnée circonférentielle de la roue 302,
- la pression à l'intérieur de la roue 302, et
- la température à l'intérieur de la roue 302.

Les FIGURES 6a et 6b sont des représentations schématiques d'un exemple d'un véhicule équipé d'un exemple d'un système de caractérisation selon l'invention.

Le système 600 représenté sur les FIGURES 6a-6b est prévu pour caractériser un véhicule 602 qui est un poids-lourd comportant trois essieux comprenant chacun au moins deux roues.

Chaque roue du véhicule 602 est une roue 302 telle que celle représentée sur les FIGURES 3a-3b, 4a-4b ou 5a-5b et équipée chacune d'un dispositif de mesure de la charge d'une roue 302 tel que le dispositif 300 représenté sur les FIGURES 3a-3b, le dispositif 400 représenté sur les FIGURES 4a-4b ou le dispositif 500 représenté sur les FIGURES 5a-5b.

Le système 600 comprend en plus des roues 302 et/ou des dispositifs 300, 400 ou 500, un premier inclinomètre 604 disposé sur le véhicule 602 et prévu pour mesurer l'inclinaison du véhicule 602 suivant la direction de la longueur du véhicule 602.

Le système 600 comprend en outre un deuxième inclinomètre 606 disposé sur le véhicule 602 et prévu pour mesurer l'inclinaison du véhicule 602 suivant la direction de la largeur du véhicule 602.

Le système 600 comprend une unité centrale de calcul 608 connectée de manière sans fil d'une part à chacune des roues 302, et en particulier au dispositif de mesure de la charge équipant chaque roue 302, et d'autre part à chacun des inclinomètres 604 et 606. Optionnellement, l'unité de calcul 608 peut également être connectée à un dispositif externe 610, tel que l'ordinateur de bord du véhicule 602 ou un capteur de mesure de vitesse, lui fournissant la vitesse du véhicule 602 lorsque celui-ci est en mouvement.

En fonction des données reçues par chacun de ces composants, l'unité centrale de calcul 608 détermine au moins un paramètre relatif au véhicule 602, en utilisant des relations prédéterminées. Le ou les paramètres déterminés par l'unité de calcul 308 peuvent comprendre les paramètres suivants :
- un poids total du véhicule 602,
- un poids d'un essieu du véhicule 602,
- un poids sur un côté du véhicule 602,
- un centre de gravité du véhicule 602,
- un centre de gravité d'un essieu du véhicule 602, et/ou
- un centre de gravité sur un côté du véhicule 602.

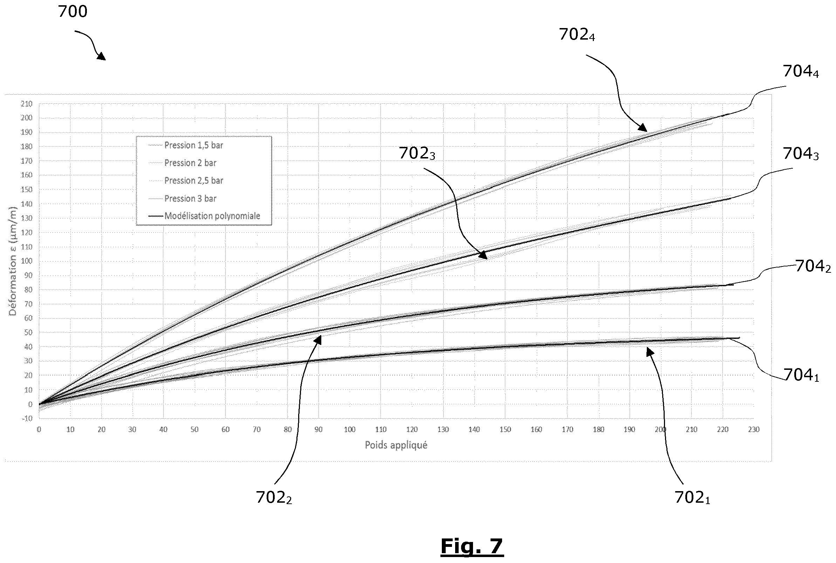

La FIGURE 7 est exemple de mesures de charge d'une roue comprenant le dispositif selon l'invention.

La FIGURE 7 représente les mesures de charges supportées par la roue 302 comprenant le dispositif 300 des FIGURES 3a-3b, à l'arrêt et soumise à différentes pressions.

Le graphe 700 comprend les courbes 702₁-702₄ représentant les mesures expérimentales de déformation de la jauge 304, des FIGURES 3a-3b, et les courbes 704₁-704₄ représentant la relation entre la déformation de la jauge 304 et la charge supportée par la roue 302.

Les courbes 702₁-702₄ représentent les mesures expérimentales de déformation de la jauge de déformation 304 lorsque la roue 302 est soumise à une charge connue. Les mesures de déformation sont effectuées à une pression donnée :
- les courbes 702₁ sont obtenues à une pression égale à 1.5 bar,
- les courbes 702₂ sont obtenues à une pression égale à 2 bar,
- les courbes 702₃ sont obtenues à une pression égale à 2.5 bar, et
- les courbes 702₄ sont obtenues à une pression égale à 3 bar.

La relation entre la déformation de la jauge de déformation 304 et la charge de la roue 302 est déterminée à partir des mesures de déformation de la jauge 304. Cette relation est une fonction polynomiale paramétrée en fonction des mesures expérimentales de déformation pour des charges de roue 302 connues. Les courbes 704₁-704₄ représentent cette relation, chaque courbe 702 correspond à une pression donnée :
- la courbe 704₁ correspond à une pression égale à 1.5 bar,
- la courbe 704₂ correspond à une pression égale à 2 bar,
- la courbe 704₃ correspond à une pression égale à 2.5 bar, et
- la courbe 704₄ correspond à une pression égale à 3 bar.

Bien sûr, l'invention n'est pas limitée aux exemples qui viennent d'être décrits et de nombreux aménagements peuvent être apportés à ces exemples sans sortir du cadre de l'invention.

## Revendications

1. Procédé (100) pour déterminer une charge d'une roue (302) d'un véhicule (602), caractérisé selon les étapes suivantes :
- mesure (112) d'au moins une donnée, dite circonférentielle, relative à une circonférence de ladite roue (302), et
- calcul (114) de la charge supportée par ladite roue (302) en fonction de ladite donnée circonférentielle.

2. Procédé (100) selon la revendication précédente, **caractérisé en ce que** la donnée circonférentielle :
- correspond à la circonférence de la roue (302), ou
- est relative à une variation de la circonférence de la roue (302) par rapport à une circonférence préalablement mesurée.

3. Procédé (100) selon l'une quelconque des revendications précédentes, **caractérisé en ce que** le calcul de la charge de la roue (302) est fonction en outre d'une charge, dite de référence, préalablement mesurée pour une circonférence, dite de référence.

4. Procédé (100) selon l'une quelconque des revendications précédentes, **caractérisé en ce qu'**il comprend une étape (108) de mesure d'au moins une donnée, dite de pression, relative à une pression à l'intérieur de la roue (302) du véhicule (602), l'étape (114) de calcul s'effectuant en fonction en outre de ladite donnée de pression.

5. Procédé (100) selon l'une quelconque des revendications précédentes, **caractérisé en ce qu'**il comprend une étape (110) de mesure d'au moins une donnée, dite de température, relative à une température à l'intérieur de la roue (302) du véhicule (602), l'étape (114) de calcul s'effectuant en fonction en outre de ladite donnée de température.

6. Procédé (200) pour caractériser un véhicule (602) comprenant plusieurs roues (302), **caractérisé en ce qu'**il comprend les étapes suivantes :
- détermination des charges d'au moins deux roues (302), en particulier de toutes les roues (302), dudit véhicule (602) par le procédé (100) selon l'une quelconques des revendications précédentes, et
- calcul (204) d'au moins un paramètre relatif audit véhicule (602) en fonction desdites charges desdites roues (302).

7. Procédé (200) selon la revendication précédente, **caractérisé en ce qu'**il comprend en outre une mesure (202) d'une donnée relative à :
- une inclinaison du véhicule (602) suivant une direction d'un essieu dudit véhicule (602), et/ou
- une inclinaison du véhicule (602) suivant une direction perpendiculaire à un essieu dudit véhicule (602).

8. Procédé (200) selon l'une quelconques des revendications 6 ou 7, **caractérisé en ce que** le paramètre relatif au véhicule (602) comprend :
- un poids total du véhicule (602) ou un poids d'un essieu du véhicule (602) ou un poids sur un côté du véhicule (602), et/ou
- un centre de gravité du véhicule (602) ou un centre de gravité d'un essieu du véhicule (602) ou un centre de gravité sur un côté du véhicule (602).

9. Dispositif (300,400,500) pour déterminer une charge d'une roue (302) d'un véhicule (602), **caractérisé en ce qu'**il comprend :
- au moins un moyen, de mesure, pour déterminer au moins une donnée, dite circonférentielle, relative à une circonférence de ladite roue (302),
- au moins un moyen (310) configuré pour déterminer la charge de ladite roue (302) en fonction de ladite au moins une donnée circonférentielle ;
ledit dispositif (300,400,500) étant configuré pour mettre en oeuvre toutes les étapes du procédé selon l'une quelconque des revendications 1 à 5.

10. Dispositif (300,400,500) selon la revendication précédente, **caractérisé en ce que** l'au moins un moyen de mesure comprend une combinaison quelconque de l'un au moins des moyens suivants :
- une jauge de déformation (304,404,504),
- un fil résistif,
- une capacité,
- un fil inductif, et/ou
- une fibre optique.

11. Dispositif (300,400,500) selon l'une quelconque des revendications 9 ou 10, **caractérisé en ce que** l'au moins un moyen de mesure est prévu pour être disposé :
- sur une face intérieure, ou extérieure, d'une bande de roulement de la roue (302), ou
- à l'intérieur de ladite bande de roulement de la roue (302).

12. Dispositif (300,400,500) selon l'une quelconque des revendications 9 à 11, **caractérisé en ce qu'**il comprend :
- au moins un moyen (306) de mesure d'au moins une donnée, dite de pression, relative à une pression à l'intérieur de la roue (302) du véhicule (602), et/ou
- au moins un moyen (308) de mesure d'au moins une donnée, dite de température, relative à une température à l'intérieur de la roue (302) du véhicule (602) ;
le moyen de calcul (310) étant configuré pour déterminer la charge de la roue (302) en fonction en outre de ladite donnée de pression, et/ou de ladite donnée de température.

13. Roue (302) équipée d'un dispositif (300,400,500) selon l'une quelconque des revendications 9 à 12 ou de moyens configurés pour mettre en oeuvre toutes les étapes du procédé (100) selon l'une quelconque des revendications 1 à 5.

14. Système (600) pour caractériser un véhicule (602) comprenant plusieurs roues (302), **caractérisé en ce qu'**il comprend :
- un dispositif (300,400,500) selon l'une quelconques des revendications 9 à 12, ou des moyens configurés pour mettre en oeuvre toutes les étapes du procédé (100) selon l'une quelconques des revendications 1 à 5, pour déterminer les charges d'au moins deux roues (302), en particulier de toutes les roues (302), dudit véhicule (602) ; et
- un moyen de calcul (608) d'au moins un paramètre relatif audit véhicule (602) en fonction desdites charges desdites roues (302).

15. Système (600) selon la revendication précédente, **caractérisé en ce qu'**il comprend au moins un moyen pour mesurer une donnée relative à :
- une inclinaison (606) du véhicule (602) suivant une direction d'un essieu dudit véhicule (602), et/ou
- une inclinaison (604) du véhicule (602) suivant une direction perpendiculaire à un essieu dudit véhicule (602).

16. Système (600) selon l'une quelconques des revendications 14 ou 15, **caractérisé en ce que** le paramètre relatif au véhicule (602) comprend :
- un poids total du véhicule (602) ou un poids d'un essieu du véhicule (602) ou un poids sur un côté du véhicule (602), et/ou
- un centre de gravité du véhicule (602) ou un centre de gravité d'un essieu du véhicule (602) ou un centre de gravité sur un côté du véhicule (602).

17. Véhicule (602) équipé d'un système (600) selon l'une quelconque des revendications 14 à 16, ou d'au moins une roue (302) selon la revendication 13 ou de moyens configurés pour mettre en oeuvre le procédé (200) selon l'une quelconque des revendications 6 à 8.

## Patentansprüche

1. Verfahren (100) zum Bestimmen einer Radlast (302) eines Fahrzeugs (602), **gekennzeichnet durch** die folgenden Schritte:
- Messen (112) zumindest eines Datums, nämlich einer sogenannten Umfangsdatenangabe, die sich auf einen Umfang des Rades (302) bezieht, und
- Berechnen (114) der von dem Rad (302) getragenen Last in Abhängigkeit von der Umfangsdatenangabe.

2. Verfahren (100) nach dem vorangehenden Anspruch,
**dadurch gekennzeichnet, dass**
die Umfangsdatenangabe
- dem Umfang des Rades (302) entspricht oder
- sich auf eine Änderung des Umfangs des Rades (302) bezogen auf einen vorab gemessenen Umfang bezieht.

3. Verfahren (100) nach einem der vorangehenden Ansprüche,
**dadurch gekennzeichnet, dass**
das Berechnen der Last des Rades (302) ferner eine Funktion einer Last, nämlich einer sogenannten Bezugslast, ist, die vorab für einen Umfang, nämlich einen sogenannten Bezugsumfang gemessen wird.

4. Verfahren (100) nach einem der vorangehenden Ansprüche,
**dadurch gekennzeichnet, dass**
es ferner einen Schritt (108) des Messens von zumindest eines Datums, nämlich einer sogenannten Druckdatenangabe, die sich auf einen Druck innerhalb des Rades (302) von dem Fahrzeug (602) bezieht, umfasst, wobei der Schritt (114) des Berechnens ferner in Abhängigkeit von der Druckdatenangabe erfolgt.

5. Verfahren (100) nach einem der vorangehenden Ansprüche,
**dadurch gekennzeichnet, dass**
es ferner einen Schritt (110) des Messens von zumindest einer Temperatur, nämlich einer sogenannten Temperaturdatenangabe, die sich auf eine Temperatur innerhalb des Rades (302) von dem Fahrzeug (602) bezieht, umfasst, wobei der Schritt (114) des Berechnens ferner in Abhängigkeit von der Temperaturdatenangabe erfolgt.

6. Verfahren (200) zum Charakterisieren eines Fahrzeugs (602), das mehrere Räder (302) enthält,
**dadurch gekennzeichnet, dass**
es die folgenden Schritte umfasst:
- Bestimmen der Lasten von zumindest zwei Rädern (302), insbesondere von allen Rädern (302), des Fahrzeugs (602) mit dem Verfahren (100) nach einem der vorangehenden Ansprüche, und
- Berechnen (204) von zumindest einem Parameter bezogen auf das Fahrzeug (602) in Abhängigkeit von den Lasten der Räder (302).

7. Verfahren (200) nach dem vorangehenden Anspruch,
**dadurch gekennzeichnet, dass**
es ferner eine Messung (202) einer Datenangabe bezogen auf
- eine Neigung des Fahrzeugs (602) in einer Richtung einer Achse des Fahrzeugs (602), und/oder
- eine Neigung des Fahrzeugs (602) in einer Richtung senkrecht zu einer Achse des Fahrzeugs (602)
umfasst.

8. Verfahren (200) nach einem der Ansprüche 6 oder 7,
**dadurch gekennzeichnet, dass**
der auf das Fahrzeug (602) bezogene Parameter das Folgende umfasst:
- ein Gesamtgewicht des Fahrzeugs (602) oder ein Gewicht einer Achse des Fahrzeugs (602) oder ein Gewicht auf einer Seite des Fahrzeugs (602), und/oder
- einen Schwerpunkt des Fahrzeugs (602) oder einen Schwerpunkt einer Achse des Fahrzeugs (602) oder einen Schwerpunkt auf einer Seite des Fahrzeugs (602).

9. Vorrichtung (300, 400, 500) zum Bestimmen einer Radlast (302) eines Fahrzeugs (602),
**dadurch gekennzeichnet, dass** sie das Folgende enthält:
- zumindest eine Messeinrichtung, um zumindest ein Datum, nämlich eine sogenannte Umfangsdatenangabe, die sich auf einen Umfang des Rades (302) bezieht, zu bestimmen, und
- zumindest eine Einrichtung (310), die dazu ausgelegt ist, die Last des Rades (302) in Abhängigkeit von der zumindest einen Umfangsdatenangabe zu bestimmen;
wobei die Vorrichtung (300, 400, 500) dazu ausgelegt ist, alle Schritte des Verfahrens nach einem der Ansprüche 1 bis 5 auszuführen.

10. Vorrichtung (300, 400, 500) nach dem vorangehenden Anspruch,
**dadurch gekennzeichnet, dass**
die zumindest eine Messeinrichtung eine beliebige Kombination aus den folgenden Einrichtungen enthält:
- einen Verformungsmessstreifen (304, 404, 504),
- einen Widerstandsdraht,
- eine Kapazität,
- einen induktiven Draht und/oder
- eine optische Faser.

11. Vorrichtung (300, 400, 500) nach einem der Ansprüche 9 oder 10,
**dadurch gekennzeichnet, dass**
die zumindest eine Messeinrichtung dazu vorgesehen ist,
- an einer Innen- oder Außenseite einer Lauffläche von dem Rad (302) oder
- innerhalb der Lauffläche von dem Rad (302)
angeordnet zu werden.

12. Vorrichtung (300, 400, 500) nach einem der Ansprüche 9 bis 11,
**dadurch gekennzeichnet, dass** sie enthält:
- zumindest eine Messeinrichtung (306) zum Messen von zumindest eines Datums, nämlich einer sogenannten Druckdatenangabe, die sich auf einen Druck innerhalb des Rades (302) von dem Fahrzeug (602) bezieht, und/oder
- zumindest eine Messeinrichtung (308) zum Messen von zumindest einer Temperatur, nämlich einer sogenannten Temperaturangabe, die sich auf eine Temperatur innerhalb des Rades (302) von dem Fahrzeug (602) bezieht;
wobei die Recheneinrichtung (310) dazu ausgelegt ist, die Last des Rades (302) ferner in Abhängigkeit von der Druckdatenangabe und/oder von der Temperaturdatenangabe zu bestimmen.

13. Rad (302), das mit einer Vorrichtung (300, 400, 500) nach einem der Ansprüche 9 bis 12 oder mit Einrichtungen versehen ist, die dazu ausgelegt sind, alle Schritte des Verfahrens (100) nach einem der Ansprüche 1 bis 5 auszuführen.

14. System (600) zum Charakterisieren eines Fahrzeugs (602), das mehrere Räder (302) enthält,
**dadurch gekennzeichnet, dass** es enthält:
- eine Vorrichtung (300, 400, 500) nach einem der Ansprüche 9 bis 12 oder Einrichtungen, die dazu ausgelegt sind, alle Schritte des Verfahrens (100) nach einem der Ansprüche 1 bis 5 auszuführen, um die Lasten von zumindest zwei Rädern (302), insbesondere von allen Rädern (302), des Fahrzeugs (602) zu bestimmen; und
- eine Recheneinrichtung (608) zum Berechnen von zumindest einem Parameter bezogen auf das Fahrzeug (602) in Abhängigkeit von den Lasten der Räder (302).

15. System (600) nach dem vorangehenden Anspruch,
**dadurch gekennzeichnet, dass**
es zumindest eine Messeinrichtung zum Messen einer Datenangabe bezogen auf
- eine Neigung (606) des Fahrzeugs (602) in einer Richtung einer Achse des Fahrzeugs (602), und/oder
- eine Neigung (604) des Fahrzeugs (602) in einer Richtung senkrecht zu einer Achse des Fahrzeugs (602) enthält.

16. System (600) nach einem der Ansprüche 14 oder 15,
**dadurch gekennzeichnet, dass**
der Parameter bezogen auf das Fahrzeug (602) umfasst:
- ein Gesamtgewicht des Fahrzeugs (602) oder ein Gewicht einer Achse des Fahrzeugs (602) oder ein Gewicht auf einer Seite des Fahrzeugs (602), und/oder
- einen Schwerpunkt des Fahrzeugs (602) oder einen Schwerpunkt einer Achse des Fahrzeugs (602) oder einen Schwerpunkt auf einer Seite des Fahrzeugs (602).

17. Fahrzeug (602), das mit einem System (600) nach einem der Ansprüche 14 bis 16 oder mit zumindest einem Rad (302) nach Anspruch 13 oder mit Einrichtungen ausgestattet ist, die dazu ausgelegt sind, das Verfahren (200) nach einem der Ansprüche 6 bis 8 durchzuführen.

## Claims

1. Method (100) for determining the load on a wheel (302) of a vehicle (602) **characterised by** the following steps:
- measurement (112) of at least one datum, termed circumferential, pertaining to the circumference of said wheel (302), and
- calculation (114) of the load supported by said wheel (302) as a function of said circumferential datum.

2. Method (100) according to the preceding claim, **characterised in that** the circumferential datum:
- corresponds to the circumference of the wheel (302), or
- relates to a variation of the circumference of the wheel (302) with respect to the circumference measured beforehand.

3. Method (100) according to any one of the preceding claims, **characterised in that** the calculation of the load on the wheel (302) is moreover a function of a load, termed reference load, measured beforehand for a circumference, termed reference circumference.

4. Method (100) according to any one of the preceding claims, **characterised in that** it comprises a measurement step (108) of at least one datum, termed pressure, relating to a pressure inside the wheel (302) of the vehicle (602), wherein the calculation step (114) is carried out as a function moreover of said pressure datum.

5. Method (100) according to any one of the preceding claims, **characterised in that** it comprises a measurement step (110) of at least one datum, termed temperature, relating to a temperature inside the wheel (302) of the vehicle (602), wherein the calculation step (114) is carried out as a function moreover of said temperature datum.

6. Method (200) for characterising a vehicle (602) that comprises a plurality of wheels (302), **characterised in that** said method comprises the following steps:
- determining the loads on at least two wheels (302), in particular on all the wheels (302) of said vehicle (602), following the method (100) according to any one of the preceding claims, and
- calculating (204) at least one parameter relating to said vehicle (602) as a function of said loads on said wheels (302).

7. Method (200) according to the preceding claim, **characterised in that** it further comprises a measurement (202) of a datum relating to:
- an inclination of the vehicle (602) along a direction of an axle of said vehicle (602), and/or
- an inclination of the vehicle (602) along a direction perpendicular to an axle of said vehicle (602).

8. Method (200) according to any one of claims 6 or 7, **characterised in that** the parameter relative to the vehicle (602) comprises:
- a total weight of the vehicle (602) or a weight on an axle of the vehicle (602) or a weight on a side of the vehicle (602), and/or
- a centre of gravity of the vehicle (602) or a centre of gravity of an axle of the vehicle (602) or a centre of gravity of a side of the vehicle (602).

9. Device (300, 400, 500) for determining the load on a wheel (302) of a vehicle (602), **characterised in that** it comprises:
- at least one measurement means to determine at least one datum, termed circumferential, relative to the circumference of said wheel (302),
- at least one means (310) configured to determine the load on said wheel (302) as a function of said at least one circumferential datum;
said device (300, 400, 500) being configured to implement all the steps of the method according to any one of claims 1 to 5.

10. Device (300, 400, 500) according to the preceding claim, **characterised in that** the at least one measurement means comprises any combination of one at least of the following means:
- a deformation gauge (304, 404, 504),
- a resistive wire,
- a capacity,
- an inductive wire, and/or
- an optical fibre.

11. Device (300, 400, 500) according to any one of claims 9 or 10, **characterised in that** the at least one measurement means is designed to be placed:
- on an interior or outer side of a tyre tread of the wheel (302), or
- on the interior of said tyre tread of the wheel (302).

12. Device (300, 400, 500) according to any one of claims 9 to 11, **characterised in that** it comprises:
- at least one means (306) to measure at least one datum, termed pressure, relative to a pressure in the interior of the wheel (302) of the vehicle (602), and/or
- at least one means (308) to measure at least one datum, termed temperature, relative to a temperature in the interior of the wheel (302) of the vehicle (602);
wherein the calculation means (310) is configured to determine the load on the wheel (302) as a function, moreover, of said pressure datum, and/or of said temperature datum.

13. Wheel (302) equipped with a device (300, 400, 500) according to any one of claims 9 to 12, or with means configured to implement all the steps of the method (100) according to any one of claims 1 to 5.

14. System (600) for characterising a vehicle (602) that comprises a plurality of wheels (302), **characterised in that** said system comprises:
- a device (300, 400, 500) according to any one of claims 9 to 12, or means configured to implement all the steps of the method (100) according to any one of claims 1 to 5, for determining the loads on at least two wheels (302), in particular on all the wheels (302), of said vehicle (602); and
- a means (608) for calculating at least one parameter relating to said vehicle (602) as a function of said loads on said wheels (302).

15. System (600) according to the preceding claim, **characterised in that** it comprises at least one means for measuring a datum relating to:
- an inclination (606) of the vehicle (602) along a direction of an axle of said vehicle (602), and/or
- an inclination (604) of the vehicle (602) along a direction perpendicular to an axle of said vehicle (602).

16. System (600) according to any one of claims 14 or 15, **characterised in that** the parameter relative to the vehicle (602) comprises:
- a total weight of the vehicle (602) or a weight on an axle of the vehicle (602) or a weight on a side of the vehicle (602), and/or
- a centre of gravity of the vehicle (602) or a centre of gravity of an axle of the vehicle (602) or a centre of gravity of a side of the vehicle (602).

17. Vehicle (602) equipped with a system (600) according to any one of claims 14 to 16, or with at least one wheel (302) according to claim 13 or with means configured to implement the method (200) according to any one of claims 6 to 8.
